# EUROPEAN PATENT SPECIFICATION

(11) **EP 1 445 209 B1**
(45) Date of publication and mention of the grant of the patent: **21.05.2008**
(21) Application number: 03250763.4
(22) Date of filing: 06.02.2003
(51) Int. Cl.: B65D 51/20

(54) **Container closure with inner seal**
Behälterverschluss mit Innendichtung
Capuchon avec un joint intérieur

(43) Date of publication of application: 11.08.2004
(73) Proprietor: Illinois Tool Works, Inc., Glenview, IL 60025-5811 (US)
(72) Inventor: Smelko, Joseph, Aurora, Ontorio L4G 3GB (CA); Thorstensen-Woll, Robert William, Barrie, Ontario L4N 5R9 (CA)
(74) Representative: Jones, Helen M.M.

(56) References cited:
- EP-A- 0 835 818
- US-A- 4 930 646
- US-A- 4 960 216
- US-A- 5 004 111
- US-A1- 2001 023 870

## Description

The present invention relates to container closure systems providing a primary seal and a secondary seal for reclosing a container using a screw cap.

When packaging a wide variety of materials ranging from pharmaceutical tablets to instant coffee in containers such as bottles and jars it is nowadays commonplace to provide a closure in the form of a seal connected to the neck of the container and a screw cap covering and protecting the seal providing a reclosable cap after the seal has been removed to gain access to the contents of the container. A convenient way of providing such a closure is to provide the undersurface of the seal with a heat sensitive adhesive coating or a meltable plastics layer covered by a metal foil. The metal foil can provide the substrate of the seal or the seal may include a separate substrate made from paper or plastics material. Such a seal is then placed against the top of the neck of a container and sandwiched against it by the applied screw cap, whilst the closure is subjected to an induction heating step which heats the metal foil and in turn activates the heat sensitive adhesive layer or melts the plastics layer so that, on cooling, the seal bonds to the top of the neck of the container.

Single component systems have been developed wherein the seal and liner comprise one moiety which is attached within the cap. The cap is screwed onto the container and then subjected to a heat sealing step such that the seal portion is adhered to the neck of the bottle. Often this is achieved by the induction heating of a metal foil within the seal structure which in turn heats a meltable layer adjacent to the container neck. On opening the bottle, the liner is retained in the cap and the seal portion is left adhered to the neck of the container.

One such product which has been sold successfully is the "Lift 'n' Peel" (Trade Mark) seal and liner to release by peel so the liner has to be free to rotate within the cap. If the liner were fixed within the cap and prevented from rotating then the shear forces generated on opening the cap would be sufficiently large that the metal foil rips before the chemical bond or adhesive layer, which form the release layer, separate. Even in the case where the foil does not actually rip, it is common that a "twist" mark will be apparent in the centre of the seal which is again, an unwanted effect. Previously this problem has been overcome by the development of a specific type of cap which has been modified to include a retaining feature which holds the liner in place whilst allowing it to rotate within the cap.

Whilst this solution is effective, it involves changing the design of the cap used which in turn leads to increased expenses. It would therefore be advantageous to develop a one component system which can be glued within a conventionally used cap. Another exemple of a vessel closy assembly is disclosed by EP 0 835 818.

The term "pressure sensitive adhesive composition" is used hereinafter to describe an adhesive composition wherein binding to a substrate is achieved only after application of pressure. In some cases, heat can additionally be applied.

The present invention discloses a method of manufacture of a vessel closing assembly for adhesion into a screw cap in which a liner laminate comprising a substrate layer and a layer of stiff film on at least one side of the substrate layer, having an attachment surface for attachment to the seal laminate, is attached to a seal laminate comprising induction heat sealable layers for sealing at one side to a container, a free tab and at least one stiff film layer which seal laminate also has an attachment surface at the other side whereby the attachment surface of the seal laminate faces the attachment surface which is on the side of the liner laminate formed by the stiff film, the joining involving the steps of:
providing a release surface on one of the attachment surfaces;
applying a pressure sensitive adhesive composition, from a liquid composition, to one of the attachment surfaces and drying the composition to leave an adhesive coating;
contacting the attachment surfaces to adhere the liner laminate to the seal laminate; and
cutting the said vessel closing assembly is from the pair of adhered laminates whereby the free tab lies wholly within the circumference of the assembly.

Following the manufacture, the vessel closing assembly is adhered into screw caps in a procedure separate to the laminate adhesion. The vessel closing assembly is adhered into said screw cap preferably by means of a hot melt adhesive. The screw cap is then screwed onto a container containing a liquid or a solid substrate which can optionally be potable or edible such that the induction heat sealable surface is in contact with the mouth of the container. The seal is then adhered to the mouth of the container by induction heating.

Preferably either the stiff film is formed from a polyester or a polypropylene, preferably polyethylene terephthalate (PET). Preferably the stiff film is white PET, in particular Melinex 891 (Trade Mark) supplied by Dupont.

Preferably the thickness of each stiff film is in the range 5 to 40µm. Where the thickness of the stiff film used is at the lower end of the preferable range, it is advantageous to include an additional layer of polypropylene laminated to the PET layer. This ensures an ease of handling and avoids the formation of wrinkles in the thin PET layer.

It has been found that Melinex 891 has a very marked effect on reducing bond values of coatings applied to the non-treated side of this material. A clear polyester is not appropriate to be in direct contact with the release coating as the bond formed to the coating would be too strong. It is believed that this difference lies in the fact that in comparison to clear polyester which has a very smooth surface, white polyester has a "microvoided" surface which is low gloss. A clear polyester can be used in the case where it is coated with a silicone release coating which will subsequently be partially transferred to the adhesive. A further advantage gained from the use of polyesters is that there are no related safety issues. The use of polyester is acceptable for all purposes including those involving contact with food.

The release surface is provided by coating the relatively stiff film with release material. Where the stiff layer is white PET, preferably the release material is a cellulose acetate propionate (CAP). CAP coatings are applied from an isopropanol solution. Appropriate CAP materials are supplied by Eastman Chemical supplies and in particular, CAP 504-0.2 (Trade Mark) is preferable.

Preferably the coating weight of the CAP layer is in the range 1 to 3g/m².

CAP has been chosen because it is a product which has not been modified with other materials and therefore a smaller variation in bond behaviour is expected. CAP also has a relatively high melting point meaning that it is unlikely to be affected by the heat during the induction sealing process. Upon application of a torque, separation occurs between the attachment surface of the stiff layer and the release layer.

Preferably the peel strength of the attachment surface at the release layer is within the range 20 to 90 grams at a rate of 1500mm/min on a sample strip 25mm wide. A more preferred range of peel strength is 30 to 60g/25mm under these conditions. The measurement of peel strength is carried out in a direction perpendicular to the strip.

The bond between the release surface and the adhesive must be greater in strength than the bond between the attachment surface and the release surface. This is important as it ensures that the adhesive remains on the seal portion adhered to the cap. It would be undesirable to have the adhesive in the cap as it would cause problems when resealing the bottle.

It has also been found that a nitrocellulose-based lacquer works in the place of CAP. In particular the product TLKGS0035562 (Trade Mark) supplied by Sun Chemical was found to have the appropriate properties.

Alternatively, in the case where the stiff layer is PET, the coating used is silicone. Silicone release coated polyester film is available from Vitex Packaging Inc. The silicone only bonds very weakly to the adhesive and upon application of a torque the bond is broken. A portion, but not all, of the silicone is transferred to the adhesive to render it no longer tacky.

Preferably the pressure sensitive adhesive is formulated with a natural or synthetic latex with rubbery properties. This introduces the characteristic that the adhesive is relatively soft and extensible thus mechanical stability of the laminate is achieved. The term "soft" is used in the present invention to indicate that the adhesive has high elongation properties.

Preferably there is no organic solvent present in either the dispersed or continuous phase of the adhesive. After coating one of the attachment surfaces the adhesive is subsequently dried to give a stable structure which can be easily manipulated.

Preferably the coating weight of the pressure sensitive adhesive composition is in the range 3 to 6 g/m²

Where the release layer is formed from CAP or a nitrocellulose based lacquer, it is preferable that the pressure adhesive composition has a degree of tackiness. This tackiness is not evident to the person opening the cap as a continuous layer of CAP or nitrocellulose will cover the adhesive layer once the cap has been removed. The degree of tackiness varies depending on the particular composition used. Use of a tacky adhesive contributes to an ease of laminating materials together and the heat and pressure during the laminating step can be adjusted to allow for the variation in tackiness.

It is also possible to use the above described pressure sensitive adhesive composition with a silicone coated polyester film but only in the case where there is a partial transfer of the silicone material to the adhesive layer.

Preferably the pressure sensitive adhesive composition is either 9126 (Trade Mark) or XS120 (Trade Mark) supplied by Dyna-Tech.

In the case where the stiff film is a silicone coated polyester, it is preferable to use a cohesive adhesive. Cohesive adhesives are used industrially in packaging processes and are not tacky. Such adhesives are specifically designed to bond to themselves upon application of pressure only. No heat is required. In the present invention, these adhesives are not used in this manner. Instead, their very low tack nature is being exploited such that the presence of these adhesives on the top of a liner does not cause any consumer concern. Cohesive adhesives provide an effective means of laminating the structures together, providing stable laminates even where the area of bonding is reduced to as little as 25%. Use of these adhesives simplifies the structure and thus results in a reduction in associated costs. A cohesive adhesive is applied from an aqueous solution or appropriate solvent to the upper surface of the seal laminate and the layer to which it is applied is corona treated prior to this application to ensure that a strong bond results between the seal laminate and the adhesive.

The cohesive adhesives used in the present invention were supplied by Sovereign Packaging Group Inc. Particularly suitable materials are Primaseal 22-184 (Trade Mark) and Primaseal 22-185 (Trade Mark).

The seal laminate preferably includes an induction heating sealable system comprising a layer of aluminium foil coated on its lowermost face with a hot melt layer. A layer of polyethylene terephthalate may be interposed between the hot melt adhesive and the aluminium foil layer to isolate the foil from the contents of the container and so to prevent corrosion of the foil layer. The seal further comprises a free tab such as in the "Top Tab" (Registered Trade Mark) and "Lift 'n' Peel" (Registered Trade Mark) systems described in US patent Nos. 4961986.

The liner substrate may be formed from a layer of food grade cardboard or a layer of foamed thermoplastics material. Preferably the thickness of the liner is in the range 0.4-1.2mm. Preferably the liner is formed from polypropylene faced polyethylene foam. It is preferable that the density of the liner is in the range 250 to 500g/l.

It is important that the stiffness of the secondary liner is appropriate. The secondary liner is formed from both the stiff film layer and the liner substrate and it is the overall stiffness of the composite rather than the individual stiffness of the components which is of importance. If the film is not sufficiently stiff then upon opening the cap, unacceptable torquing of the liner will occur leading to unacceptable distortion of the liner. This is detrimental to the secondary seal and makes it more difficult to separate the seal and liner portions as the required shear forces cannot be generated.

For the purposes of the present invention, stiffness in relation to the liner portion is defined as a resistance to distortion of the secondary liner when the cap is removed form the body.

Appropriate composites were determined by comparative testing. It has been found that use of a foam with a higher foam density, use of a foam made from a higher density resin and use of a foam surfaced with a material having a higher tensile modulus results in a secondary liner less prone to distortion upon application of a shear force.

Polypropylene has a higher tensile modulus than polyethylene foam and therefore by coating the surface of the polyethylene foam with polypropylene to give a polypropylene faced polyethylene foam, a stiffer foam is obtained. Preferably the thickness of the polypropylene layer is in the range 20-50µm. In particular, the product Sureseal 626 (Trade Mark) supplied by J S Plastics was found to have the appropriate properties.

The screw cap is a conventional screw cap and may include a multiturn screw thread or a multistart part turn thread. The container may be made of glass or plastics material such as polyethylene, polyester, polyvinyl chloride, polypropylene or acrylonitrile butadiene stryene.

Three embodiments of a one component seal and liner system as describe by the present invention will now be described with reference to the following figures, in which;-
Figure 1 is a cross section through a first example with a vertical dimension greatly exaggerated;
Figure 2 is a cross section through a second example with a vertical dimension greatly exaggerated;
Figure 3 is a cross section through a third embodiment with a vertical dimension greatly exaggerated;
Figure 4 is a cross section through a screw cap showing the liner and seal in place; and

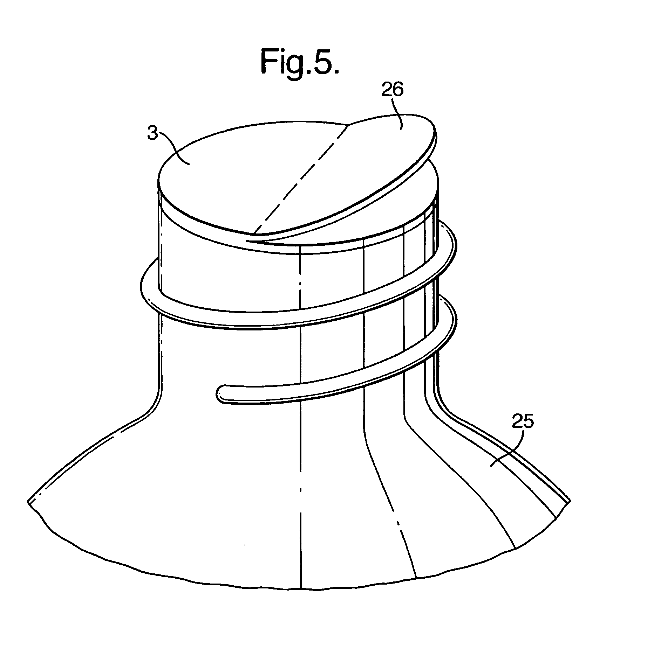

Figure 5 is a perspective view showing the seal in place on the neck of a container.

The vessel closing assembly comprises a seal laminate 3 and a liner laminate 2. In this example, the seal laminate is the "Lift 'n' Peel" (RTM) system. The seal laminate is formed by a number of layers which starting from the bottom layer comprise a coating of hot melt adhesive 4 chosen partly based on the nature of the characteristics of the container wherein suitable adhesives include polyester coatings, ethylene vinyl acetate, polypropylene, ethylene-acrylic acid copolymers, Surlyn (Trade Mark) and other materials known in the industry; a layer of polyethylene terephthalate (PET) 5; a layer of aluminium foil 6 25 microns thick; a layer of polyethylene foam 7, preferably due to its bonding behaviour and bond strength wherein the thickness of this layer is at least 0.0008cm, more preferably at least 0.0013cm; a layer of polyethylene terephthalate (PET) 8 extending only partway across the layer of foam 7 and not adhered to the foam layer 7; a layer of EVA which readily bonds to the foam layer 7 and a layer of polyethylene terephthalate (PET) 10 which is sufficiently rigid and strong so as to maintain strength at small thicknesses and a high pull strength.

The liner laminate 2 is formed by application of a layer of CAP coating 12 from an isopropanol solution to the white polyester film surface 13 of a laminated structure formed from a layer of white PET film with a thickness in the range 8 to 40µm laminated to a layer of polypropylene film with a thickness in the range 30 to 50µm. A pressure sensitive coating 11 is then applied from an aqueous solution to the CAP layer 12 wherein the coating weight of the adhesive layer is in the range 3 to 6g/m². The layer 11 is then dried to leave a tacky stable adhesive layer to which the attachment surface formed of white PET 13 coated with CAP to form a release layer 12, is subsequently adhered by a heat and pressure lamination step. The binding of layers 11 and 12 is sufficiently strong so as to give a stable system but weak enough that only weak shear forces are required to separate the two layers. A layer of polypropylene faced polyethylene foam 15 is then adhesively laminated to the upper surface of the polypropylene film 14 to give the completed vessel closing assembly wherein the foam layer has a thickness in the range 0.4 to 1.1 mm and a density in the range 250 to 500g/l.

Following the formation of the laminate, it is die cut to form discs of the vessel closing assembly 1. The vessel closing assembly 1 is fixed inside the top of a screw cap 24 by means of hot melt adhesive 30. A screw cap equipped with a vessel closing assembly in accordance with the present invention is screwed onto the open neck of a bottle thus sandwiching the vessel closing assembly 1 between the open neck of the bottle and the top of the cap. The cap 24 and the bottle 25 are then subjected to an induction heating step in which the aluminium foil is heated around its periphery by the generation of eddy currents within it which, in turn, melts the coating 4 of the hot melt adhesive to bond the seal portion onto the open neck of the bottle. The sealed container is then distributed.

When the screw cap is removed from the bottle by the eventual user, the seal laminate 3 remains adhered to the open neck of the bottle 25 whilst the liner remains fixed in the cap 24. The seal and liner portions separate between the release and attachment layers, specifically layers 12 and 13. The CAP coating of the attachment surface 12 is transferred to the adhesive layer 11 so the top of the seal portion is no longer left tacky.

In this embodiment, the seal portion includes a tab 26 so the eventual user can easily remove the seal portion 3 from the neck of the bottle 25 by gripping the tab portion 8 and the manual force applied to the tab overcomes the adhesion provided between the hot melt coating 4 and the neck of the bottle to enable the entire seal portion 3 to be removed to allow the user to gain access to the contents of the bottle. The liner portion 2 has remained glued into the cap 24 meaning that the bottle is resealable following the removal of the seal.

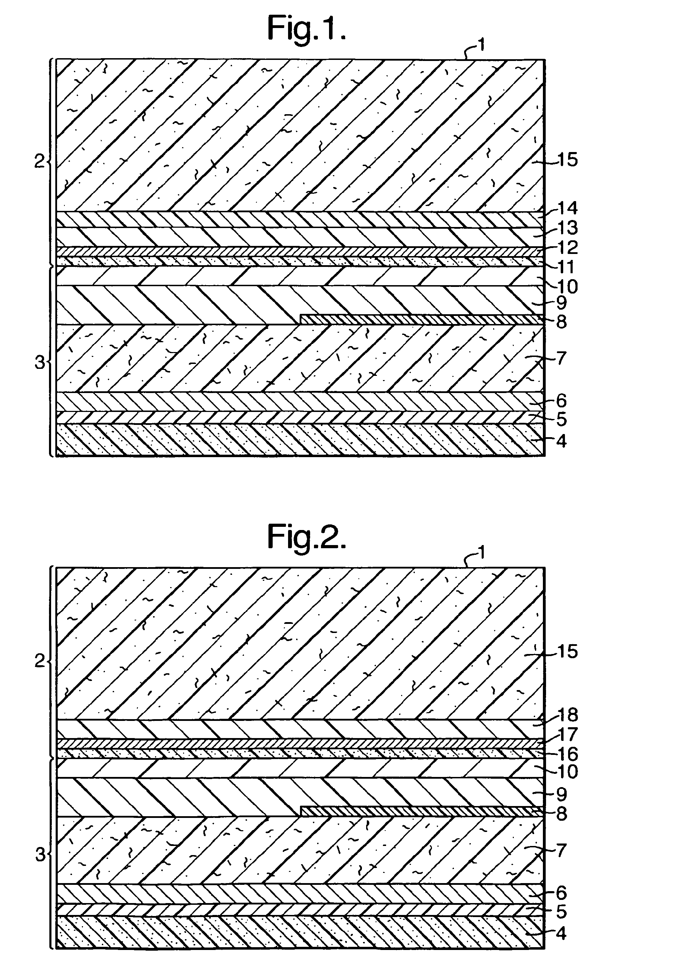

In a second embodiment as shown in Figure 2, layer 4 to layer 10 of the assembly are manufactured in the same way as described above. The liner laminate 2 is formed by application of a pressure sensitive adhesive coating 16 to a layer of polyethylene terephthalate 18 coated with a silicone release coating 17wherein the thickness of the PET layer 18 is in the range 8 to 40 µm and the coating weight of the adhesive is in the range 3 to 6g/m². The adhesive layer is dried so as to leave a tacky stable adhesive to which the PET layer 10 of the seal laminate is adhered by a heat and pressure lamination step. A layer of polypropylene faced polyethylene faced foam 15 with a thickness in the range 0.4 to 1.1mm and density in the range 250 to 500g/l is then adhesively laminated to the upper surface of the PET 18. When the screw cap is removed from the bottle by the eventual user, the seal laminate 3 remains adhered to the bottle 25 whilst the liner remains fixed in the cap 24. The seal 3 and liner 2 portions separate between the release 17 and attachment layers 18 with the silicone coating being partially transferred to the adhesive layer 16 so the top of the seal portion is no longer left tacky.

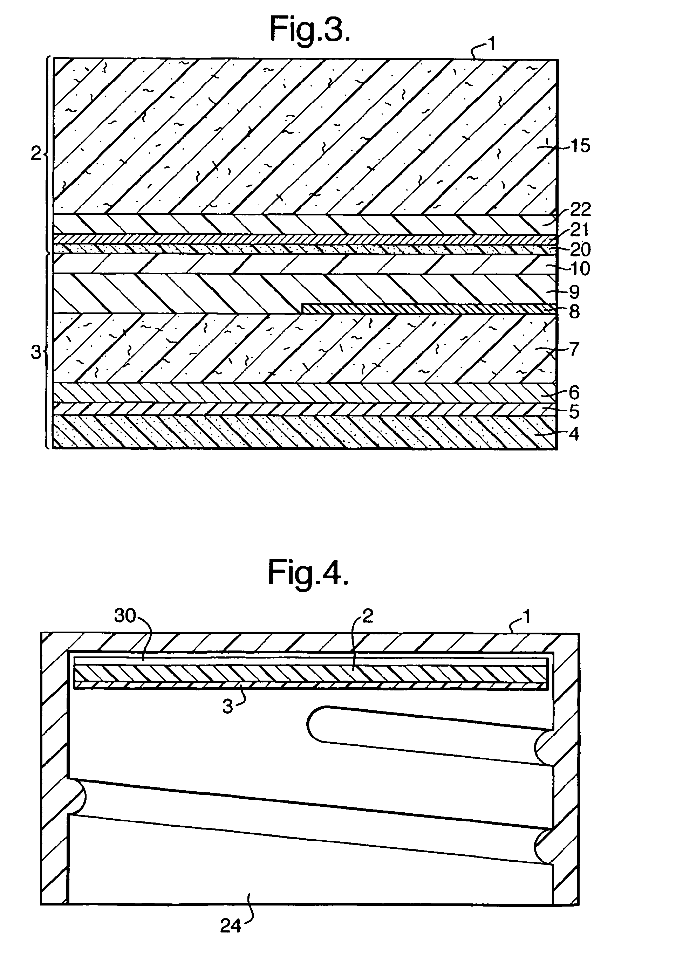

In a third embodiment as illustrated by figure 3, the seal laminate 3 is manufactured in the same way as described previously. In this embodiment, the pressure sensitive adhesive composition used is a cohesive adhesive 20. Prior to application of the adhesive, the top PET layer 10 is corona treated. The adhesive is applied from an aqueous solution or appropriate solvent to the top PET layer 10 of the seal laminate to give a coating weight in the range 3 to 6g/m². The adhesive is dried. A layer of clear PET film 22 with a thickness in the range 8 to 40µm coated with silicone release coating 21 is adhered to the layer by means of a pressure lamination step. A layer of polypropylene faced polyethylene foam 15 with a thickness in the range 0.4 to 1.1 mm and a density in the range 250 to 500g/l is subsequently adhered to the layer to give the completed vessel assembly.

## Claims

1. Method of manufacture of a vessel closing assembly for adhesion into a screw cap in which a liner laminate comprising a substrate layer and a layer of stiff film on at least one side of the substrate layer, having an attachment surface for attachment to the seal laminate, is attached to a seal laminate comprising induction heat sealable layers for sealing at one side to a container, a free tab, at least one stiff film layer, and an attachment surface at the other side of the seal laminate whereby the said seal laminate attachment surface faces the liner laminate attachment surface, the joining involving the steps of:
providing a release surface on one of the attachment surfaces;
applying a pressure sensitive adhesive composition, from a liquid composition, to one of the attachment surfaces and drying the composition to leave an adhesive coating;
contacting the attachment surfaces to adhere the liner laminate to the seal laminate; and
cutting the vessel closing assembly from the pair of adhered laminates, whereby the free tab lies wholly within the circumference of the assembly.

2. A method according to claim 1 wherein the vessel closing assembly is adhered into a screw cap in a procedure separate to the laminate adhesion procedure.

3. The method according to claim 2 in which the assembly is adhered into the cap by a hot melt adhesive.

4. The method according to any preceding claim in which the release surface is provided by coating the relatively stiff film with release material.

5. The method according to any preceding claim in which the release layer is a cellulose acetate propionate coating.

6. The method according to claim 5 in which the coating weight of the CAP layer is in the range 1 to 3g/m².

7. The method according to any of claims 1 to 4 in which the release layer is a silicone coating.

8. The method according to claim 4 wherein the release material is transferable to the adhesive on separation of the liner and the seal of the assembly such that the adhesive is no longer tacky.

9. The method according to any of the preceding claims in which the substrate layer of the liner laminate is formed from foamed thermoplastics material.

10. The method according to claim 9 in which the foamed thermoplastics material is polypropylene faced polyethylene foam.

11. The method according to claim 9 in which the thickness of the foamed thermoplastics material is in the range 0.4 to 1.1 mm.

12. The method according to claim 9 in which the density of the foamed thermoplastics material is in the range 250 to 500g/l.

13. The method according to any preceding claim in which each stiff film is formed from a polyester or polypropylene, preferably polyethylene terephthalate.

14. The method according to any preceding claim in which the thickness of each stiff film is in the range 8.0 to 40µm.

15. The method according to any preceding claim in which each stiff film is white polyethylene terephthalate.

16. The method according to any preceding claim in which the pressure sensitive adhesive composition is formulated with a natural or synthetic latex with high elongation properties.

17. The method according to any preceding claim in which the release surface is on a stiff film layer and the pressure sensitive adhesive composition is applied to the surface of the release layer.

18. The method according to any of claims 1 to 16 in which the release surface is on the stiff film layer of the liner laminate and the pressure sensitive adhesive composition is applied to the top surface of the seal laminate.

19. The method according to any preceding claim in which the peel strength of the attachment surface at the release layer is in the range 20 to 90g/25mm, preferably in the range 30 to 60g/25mm.

20. The method according to any preceding claim in which the pressure sensitive adhesive composition is a cohesive adhesive.

21. The method of any preceding claim in which the induction heat sealable layers comprise an aluminium foil layer.

22. A vessel closing assembly (1) for adhesion into a screw cap including a seal laminate (3) having lower layers (4,5) which form an induction heating sealable system for attaching the seal (3) to the neck of a container, a free tab lying wholly within the circumference of the assembly and a seal laminate stiff film layer (10) having an attachment surface at its top, a layer of a rubbery pressure sensitive adhesive (11) coated on said attachment surface of the stiff film layer (10) of the seal laminate (3) with a coating weight in the range 3 to 6g/m², a release layer (12) and a liner laminate (2) having a liner laminate stiff film layer (13) wherein the stiff film (13) has a thickness in the range 8 to 40µm and the release layer (12) is adhered between the upper surface of the adhesive layer (11) and the lower surface of the stiff film layer (13), and a foamed thermoplastics liner (15) with a thickness in the range 0.4 to 1.1 mm and a density in the range 250 to 500g/l attached to the upper surface of the stiff film (13) wherein:
the peel strength of the attachment surface of the seal laminate stiff layer (10) from the liner laminate at the release layer (12) is in the range 20 to 90g/25mm.

23. A vessel closing assembly according to claim 22 in which the stiff film (13) is polyethylene terephthalate.

24. A vessel closing assembly according to claim 22 or 23 wherein the release layer (12) is cellulose acetate propionate.

25. A vessel closing assembly according to claim 22 or 23 wherein the release layer (12) is silicone.

26. A vessel closing assembly according to any of claims 21 to 25 wherein the foamed thermoplastics liner (15) is polypropylene faced polyethylene foam.

27. A screw cap which has adhered within it a vessel closing assembly (1) formed according to claim 1.

28. A container which is fitted with a cap according to claim 27, wherein the seal is sealed to the mouth of the container to enclose a liquid or solid substance.

29. The container according to claim 28 in which the liquid or solid substance is potable or edible.

30. A method of closing a container in which a screw cap according to claim 27 is screwed onto a container containing a liquid or solid material whereby the lower surface of the induction heat sealable layers is in contact with the mouth of the container, and the seal is induction heat sealed to the mouth of the container.

## Patentansprüche

1. Verfahren zur Herstellung einer Gefäßverschlussanordnung, die in einer Schraubkappe haftet, in der ein lineares Laminat aus einer Substratschicht und einer Schicht aus einer steifen Folie auf zumindest einer Seite der Substratschicht mit einer Befestigungsfläche zur Befestigung am Dichtungslaminat an einem Dichtungslaminat befestigt ist, das Induktionsheißklebeschichten zum Versiegeln auf einer Seite eines Behälters, eine freie Lasche, zumindest eine steife Folienschicht und eine Befestigungsfläche auf der anderen Seite des Dichtungslaminats umfasst, wodurch die Dichtungslaminat-Befestigungsfläche zur Befestigungsfläche des Auskleidungslaminats zeigt, wobei die Verbindung folgende Schritte umfasst:
Bereitstellung einer Ablöseschicht auf einer der Befestigungsflächen;
Aufbringen einer Haftkleberzusammensetzung aus einer flüssigen Zusammensetzung auf eine der Befestigungsflächen und Trocknen der Zusammensetzung, um eine Klebeschicht zu erhalten;
Inkontaktbringen der Befestigungsflächen zum Anhaften des Auskleidungslaminats am Dichtungslaminat; und
Ausschneiden der Gefäßverschlussanordnung aus dem Paar aneinander haftender Laminate, wodurch die freie Lasche vollständig innerhalb des Umfangs der Anordnung liegt.

2. Verfahren nach Anspruch 1, worin die Gefäßverschlussanordnung in einem vom Laminatadhäsionsverfahren getrennten Verfahren in eine Schraubkappe geklebt wird.

3. Verfahren nach Anspruch 2, worin die Anordnung mit einem Heißkleber in die Kappe geklebt wird.

4. Verfahren nach einem der vorhergehenden Ansprüche, worin die Ablösefläche bereitgestellt wird, indem die relativ steife Folie mit einem Abtrennmaterial beschichtet wird.

5. Verfahren nach einem der vorhergehenden Ansprüche, worin die Ablöseschicht ein Überzug aus Celluloseacetatpropionat ist.

6. Verfahren nach Anspruch 5, worin das Beschichtungsgewicht der CAP-Schicht im Bereich von 1 bis 3 g/m² liegt.

7. Verfahren nach einem der Ansprüche 1 bis 4, worin die Ablöseschicht ein Silikonüberzug ist.

8. Verfahren nach Anspruch 4, worin das Abtrennmaterial beim Lösen der Auskleidung auf den Klebstoff übertragbar ist und die Anordnung so versiegelt ist, dass der Klebstoff nicht mehr klebrig ist.

9. Verfahren nach einem der vorhergehenden Ansprüche, worin die Substratschicht des Auskleidungslaminats aus geschäumtem thermoplastischem Material besteht.

10. Verfahren nach Anspruch 9, worin das geschäumte thermoplastische Material Polyethylen-Schaumstoff mit einer Polypropylenfläche ist.

11. Verfahren nach Anspruch 9, worin die Dicke des geschäumten thermoplastischen Materials im Bereich von 0,4 bis 1,1 mm liegt.

12. Verfahren nach Anspruch 9, worin die Dichte des geschäumten thermoplastischen Materials im Bereich von 250 bis 500 g/l liegt.

13. Verfahren nach einem der vorhergehenden Ansprüche, worin jede steife Folie aus Polyester oder Polypropylen, vorzugsweise Polyethylenterephthalat geformt ist.

14. Verfahren nach einem der vorhergehenden Ansprüche, worin die Dicke jeder steifen Folie im Bereich von 8,0 bis 40 µm liegt.

15. Verfahren nach einem der vorhergehenden Ansprüche, worin jede steife Folie weißes Polyethylenterephthalat ist.

16. Verfahren nach einem der vorhergehenden Ansprüche, worin die Haftkleberzusammensetzung mit einem natürlichen oder synthetischen Latex mit hohen Dehnungseigenschaften formuliert ist.

17. Verfahren nach einem der vorhergehenden Ansprüche, worin die Ablösefläche auf einer Schicht aus steifer Folie vorliegt und die Haftkleberzusammensetzung auf die Oberfläche der Ablösefläche aufgebracht wird.

18. Verfahren nach einem der Ansprüche 1 bis 16, worin die Ablösefläche auf der steifen Folienschicht des Auskleidungslaminats vorliegt und die Haftkleberzusammensetzung auf die Oberseite des Dichtungslaminats aufgebracht wird.

19. Verfahren nach einem der vorhergehenden Ansprüche, worin die Abziehstärke der Befestigungsfläche an der Ablöseschicht im Bereich von 20 bis 90 g/25 mm, vorzugsweise im Bereich von 30 bis 60 g/25 mm liegt.

20. Verfahren nach einem der vorhergehenden Ansprüche, worin die Haftkleberzusammensetzung ein kohäsiver Klebstoff ist.

21. Verfahren nach einem der vorhergehenden Ansprüche, worin die Induktionsheißklebeschichten eine Aluminiumfolienschicht umfassen.

22. Gefäßverschlussanordnung (1), die in einer Schraubkappe haftet, mit einem Dichtungslaminat (3) mit unteren Schichten (4, 5), die ein Induktionsheißklebesystem zum Befestigen der Dichtung (3) am Hals eines Behälters bilden, wobei eine Lasche gänzlich innerhalb des Umfangs der Anordnung liegt und eine steife Folienschicht (10) des Dichtungslaminats eine Befestigungsfläche auf der Oberseite, eine Schicht aus einem gummiartigen Haftkleber (11) auf der Befestigungsfläche der steifen Folienschicht (10) des Dichtungslaminats (3) mit einem Beschichtungsgewicht im Bereich von 3 bis 6 g/m², eine Ablöseschicht (12) und ein Auskleidungslaminat (2) mit einer steifen Folienschicht (13) des Auskleidungslaminats aufweist, worin die steife Folie (13) eine Dicke im Bereich von 8 bis 40 µm aufweist und die Ablöseschicht (12) zwischen die Oberseite der Klebeschicht (11) und die Unterseite der steifen Folienschicht (13) geklebt ist, und eine geschäumte thermoplastische Auskleidung (15) mit einer Dicke im Bereich von 0,4 bis 1,1 mm und einer Dichte im Bereich von 250 bis 500 g/1, die auf der Oberseite der steifen Folie (13) befestigt ist, worin:
die Abziehstärke der Befestigungsfläche der steifen Schicht (10) des Dichtungslaminats vom Auskleidungslaminat an der Ablöseschicht (12) im Bereich von 20 bis 90 g/25 mm liegt.

23. Gefäßverschlussanordnung nach Anspruch 22, worin die steife Folie (13) Polyethylenterephthalat ist.

24. Gefäßverschlussanordnung nach Anspruch 22 oder 23, worin die Ablöseschicht (12) Celluloseacetatpropionat ist.

25. Gefäßverschlussanordnung nach Anspruch 22 oder 23, worin die Ablöseschicht (12) Silikon ist.

26. Gefäßverschlussanordnung nach einem der Ansprüche 21 bis 25, worin die geschäumte thermoplastische Auskleidung (15) Polyethylen-Schaumstoff mit einer Polypropylenfläche ist.

27. Schraubkappe, die in eine Gefäßverschlussanordnung (1) nach Anspruch 1 geklebt ist.

28. Behälter mit einer Kappe nach Anspruch 27, worin die Dichtung am Mundstück des Behälters abgedichtet ist, um eine flüssige oder feste Substanz einzuschließen.

29. Behälter nach Anspruch 28, worin die flüssige oder feste Substanz trinkbar oder essbar ist.

30. Verfahren zum Verschließen eines Behälters, bei dem eine Schraubkappe nach Anspruch 27 auf einen Behälter mit einem flüssigen oder festen Material aufgeschraubt ist, wobei die Unterseite der Induktionsheißklebeschichten mit dem Mundstück des Behälters in Kontakt steht und wobei die Dichtung mit Induktionswärme auf dem Mundstück des Behälters versiegelt ist.

## Revendications

1. Procédé de fabrication d'un ensemble de fermeture de contenant destiné à être collé dans une capsule à vis dans lequel un stratifié de garniture comportant une couche support et une couche pelliculaire rigide sur au moins un côté de la couche support, présentant une surface de fixation pour la fixer sur le stratifié de scellement, est fixé sur un stratifié de scellement comportant des couches scellables à chaud par induction pour le sceller d'un côté sur un contenant, une languette libre, au moins une couche pelliculaire rigide, et une surface de fixation de l'autre côté du stratifié de scellement, ladite surface de fixation du stratifié de scellement faisant face à la surface de fixation du stratifié de garniture, l'assemblage faisant intervenir les étapes consistant à :
fournir une surface de détachement sur une des surfaces de fixation ;
appliquer une composition adhésive sensible à la pression, fabriquée à partir d'une composition liquide, sur une des surfaces de fixation et faire sécher la composition pour laisser un revêtement adhésif ;
mettre en contact les surfaces de fixation pour coller le stratifié de garniture sur le stratifié de scellement ; et
découper l'ensemble de fermeture de contenant dans la paire de stratifiés collés, la languette libre reposant entièrement à l'intérieur du pourtour de l'ensemble.

2. Procédé selon la revendication 1 dans lequel l'ensemble de fermeture de contenant est collé dans une capsule à vis lors d'une procédure qui est séparée de la procédure de collage des stratifiés.

3. Procédé selon la revendication 2 dans lequel l'ensemble est collé dans la capsule par un adhésif thermofusible.

4. Procédé selon l'une quelconque des revendications précédentes dans lequel la surface de détachement est fournie en recouvrant la pellicule relativement rigide de matériau de détachement.

5. Procédé selon l'une quelconque des revendications précédentes dans lequel la couche de détachement est un revêtement de proprionate d'acétate de cellulose.

6. Procédé selon la revendication 5 dans lequel le poids du revêtement de la couche de proprionate d'acétate de cellulose est de l'ordre de 1 à 3 g/m2.

7. Procédé selon l'une quelconque des revendications 1 à 4 dans lequel la couche de détachement est un revêtement de silicone.

8. Procédé selon la revendication 4 dans lequel le matériau de détachement est transférable sur l'adhésif au moment de la séparation de la garniture et de l'élément de scellement de l'ensemble de façon à ce que l'adhésif ne soit plus collant.

9. Procédé selon l'une quelconque des revendications précédentes dans lequel la couche support du stratifié de garniture est formée dans un matériau en mousse thermoplastique.

10. Procédé selon la revendication 9 dans lequel le matériau en mousse thermoplastique est de la mousse de polyéthylène parée de polypropylène.

11. Procédé selon la revendication 9 dans lequel l'épaisseur du matériau en mousse thermoplastique est de l'ordre de 0,4 à 1,1 mm.

12. Procédé selon la revendication 9 dans lequel la densité du matériau en mousse thermoplastique est de l'ordre de 250 à 500 g/l.

13. Procédé selon l'une quelconque des revendications précédentes dans lequel chaque pellicule rigide est formée dans du polyester ou polypropylène, de préférence du téréphtalate de polyéthylène.

14. Procédé selon l'une quelconque des revendications précédentes dans lequel l'épaisseur de chaque pellicule rigide est de l'ordre de 8,0 à 40 µm.

15. Procédé selon l'une quelconque des revendications précédentes dans lequel chaque pellicule rigide est du téréphtalate de polyéthylène blanc.

16. Procédé selon l'une quelconque des revendications précédentes dans lequel la composition de l'adhésif sensible à la pression est formulée avec du latex naturel ou synthétique possédant des propriétés d'allongement élevé.

17. Procédé selon l'une quelconque des revendications précédentes dans lequel la surface de détachement est sur une couche pelliculaire rigide et la composition de l'adhésif sensible à la pression est appliquée sur la surface de la couche de détachement.

18. Procédé selon l'une quelconque des revendications 1 à 16 dans lequel la surface de détachement est sur la couche pelliculaire rigide du stratifié de garniture et la composition de l'adhésif sensible à la pression est appliquée sur la surface supérieure du stratifié de scellement.

19. Procédé selon l'une quelconque des revendications précédentes dans lequel la résistance au pelage de la surface de détachement au niveau de la couche de détachement est de l'ordre de 20 à 90 g/25 mm, de préférence de l'ordre de 30 à 60 g/25 mm.

20. Procédé selon l'une quelconque des revendications précédentes dans lequel la composition de l'adhésif sensible à la pression est un adhésif cohésif.

21. Procédé selon l'une quelconque des revendications précédentes dans lequel les couches scellables à chaud par induction comportent une couche de feuille d'aluminium.

22. Ensemble de fermeture de contenant (1) destiné à être collé dans une capsule à vis comprenant un stratifié de scellement (3) présentant des couches inférieures (4, 5) qui forment un système scellable à chaud par induction pour fixer l'élément de scellement (3) sur le col d'un contenant, une languette libre reposant entièrement à l'intérieur du pourtour de l'ensemble et une couche pelliculaire rigide de stratifié de scellement (10) présentant une surface de fixation sur son dessus, une couche d'adhésif caoutchouteuse sensible à la pression (11) recouvre ladite surface de fixation de la couche pelliculaire rigide (10) du stratifié de scellement (3) avec un poids de revêtement de l'ordre de 3 à 6 g/m², une couche de détachement (12) et un stratifié de garniture (2) présentant une couche pelliculaire rigide de stratifié de garniture (13) dans lequel la pellicule rigide (13) a une épaisseur de l'ordre de 8 a 40 µm et la couche de détachement (12) est collée entre la surface supérieure de la couche adhésive (11) et la surface inférieure de la couche pelliculaire rigide (13), et une garniture en mousse thermoplastique (15) d'une épaisseur de l'ordre de 0,4 à 1,1 mm et d'une densité de l'ordre de 250 à 500 g/1 fixée sur la surface supérieure de la pellicule rigide (13) dans lequel :
la résistance au pelage de la surface de détachement de la couche de scellement rigide du stratifié de scellement (10) quand détachée du stratifié de garniture au niveau de la couche de détachement (12) est de l'ordre 20 à 90 g/25 mm.

23. Ensemble de fermeture de contenant selon la revendication 22 dans lequel la pellicule rigide (13) est du téréphtalate de polyéthylène.

24. Ensemble de fermeture de contenant selon la revendication 22 ou 23 dans lequel la couche de détachement (12) est du propionate d'acétate de cellulose.

25. Ensemble de fermeture de contenant selon la revendication 22 ou 23 dans lequel la couche de détachement (12) est du silicone.

26. Ensemble de fermeture de contenant selon l'une quelconque des revendications 21 à 25 dans lequel la garniture en mousse thermoplastique (15) est de la mousse de polyéthylène parée de polypropylène.

27. Capsule à vis à l'intérieur de laquelle est collé un ensemble de fermeture de contenant (1) formé selon la revendication 1.

28. Récipient qui est muni d'une capsule selon la revendication 27, dans lequel l'élément de scellement est scellé sur l'embouchure du récipient pour enfermer un liquide ou une substance solide.

29. Récipient selon la revendication 28 dans lequel le liquide ou la substance solide est potable ou comestible.

30. Procédé de fermeture d'un récipient dans lequel une capsule à vis selon la revendication 27 est vissée sur un récipient contenant un liquide ou une matière solide, la surface inférieure des couches scellables à chaud par induction étant en contact avec l'embouchure du récipient, et l'élément de scellement étant scellé à chaud par induction sur l'embouchure du récipient.
